# EUROPÄISCHE PATENTANMELDUNG

(11) **EP 1 258 562 A2**
(43) Veröffentlichungstag der Anmeldung: **20.11.2002**
(21) Anmeldenummer: 02009340.7
(22) Anmeldetag: 03.05.2002
(51) Int. Cl.: D21H 21/28, C09B 67/22

(54) **Färben von Papier mit Farbstoffmischungen**

(30) Priorität: 16.05.2001 DE 10123883; 09.07.2001 DE 10133275
(71) Anmelder: BAYER AG, 51368 Leverkusen (DE)
(72) Erfinder: Franken, Paul, 50674 Köln (DE); Roick, Thomas, Dr., 51375 Leverkusen (DE); Landsgesel, Udo, 51465 Bergisch Gladbach (DE); Müller, Heinz, 51399 Burscheid (DE); Strumpf, Klaus-Guenter, 51373 Leverkusen (DE); Klahr, Antje, 51519 Odenthal (DE); Wild, Peter, Dr., 51519 Odenthal (DE); Hundertmark, Claudia, Dr., 50126 Bergheim (DE); Kunde, Klaus, Dr., 53819 Neunkirchen-Seelscheid (DE)

(57) **Zusammenfassung**

Verfahren zur Herstellung von Papier dadurch gekennzeichnet, dass man eine Farbstoffmischung verwendet, die wenigstens einen anionischen Farbstoff mit einem Absorptionsmaximum im Bereich von 390 bis 470 nm und wenigstens einem anionischen Farbstoff mit einem Absorptionsmaximum im Bereich von 560 bis 650 nm enthält.

## Beschreibung

Die Erfindung betrifft ein Verfahren zum Färben von Papier mit einer Farbstoffmischung, Farbstoffmischungen an sich sowie ein Verfahren zu deren Herstellung.

Der bei der Herstellung von Verpackungsmaterialien üblicherweise eingesetzte native Kraftzellstoff, nach seinem Herstellungsverfahren auch als Sulfatzellstoff bekannt, hat einen hellbraunen, nur in einem engen Nuancenbereich variierende Farbton. Seit einiger Zeit wird zur Herstellung dieser Verpackungsmaterialien vermehrt, in manchen Fällen sogar ausschließlich aus Altpapier wiedergewonnener Zellstoff verwendet. Die äußeren Schichten dieser Verpackungsmaterialien aus Kraftzellstoff werden als Liner bezeichnet, solche aus wiedergewonnenem Zellstoff als Testliner.

Zur Erzielung des gewohnten Farbtons des Kraftzellstoffes werden Testliner mit basischen Farbstoffen z. B. des Typs C. I. Basic Brown 1 allein oder in Mischungen mit anderen basischen Farbstoffen gefärbt; dabei stellen Farbstoffe vom Typ C.I. Basic Brown 1 den weitaus größten Anteil. Die mit Farbstoffen vom Typ C.I. Basic Brown 1 gefärbten Test-Liner neigen aber bei der Lagerung stark zum Verröten. Auch Liner werden heute zur Erlangung einer konstanten Nuance gefärbt.

Aufgabe der vorliegenden Erfindung war es, Ersatzfarbstoffe für C.I. Basic Brown 1 zu finden, die die erwähnten Nachteile nicht aufweisen.

Die Erfindung betrifft ein Verfahren zum Färben von Papier, das dadurch gekennzeichnet ist, dass man Farbstoffmischungen einsetzt, die wenigstens einen anionischen Farbstoff mit einem Absorptionsmaximum von 390 und 470 nm und wenigstens einen anionischen Farbstoff mit einem Absorptionsmaximum von 560 und 650 nm enthält.

Die erhaltenen Färbungen besitzen eine bessere Ausblutechtheit sowie eine bessere Lichtechtheit gegenüber Basic-Brown 1 und zeigen außerdem keine Neigung zum Verröten.

Die Farbstoffmischungen können in Form von Pulver oder Granulaten, insbesondere aber als wässrige Lösungen oder Suspensionen eingesetzt werden.

Zur Herstellung von Pulvern können die Komponenten in der in der Farbstoffindustrie üblichen Weise als Pulver zusammengegeben und vermischt werden oder, wie auch zur Herstellung von Granulaten, als feuchte Presskuchen oder wässrige Lösungen gemischt und gemeinsam getrocknet werden, z. B. mittels eines Sprühtrockners.

Liegen die Komponenten beispielsweise als stabile konzentrierte wässrige Lösungen vor, können diese im erfindungsgemäßen Verhältnis gemischt werden. Um stabile konzentrierte wässrige Lösungen der Mischungen zu erhalten, ist zu beachten, dass nicht durch eine Mischungskomponente Bestandteile eingebracht werden, die zusammen mit Bestandteilen einer anderen Mischungskomponente zu Ausfällungen führen, wie z. B. durch die Einbringung von Natrium-Ionen, die bei manchen Farbstofflösungen zu Ausfällungen der Natrium-Salze der Farbstoffe führen.

Die Mischung wird vorzugsweise in einer Menge von 0,05 - 2 Gew.-% (berechnet als Summe der Reinfarbstoffe), bevorzugt in einer Menge von 0,1 - 1 %, bezogen auf trockene Papiermasse, eingesetzt.

In einer bevorzugten Ausführungsform werden Liner, insbesondere Testliner gefärbt.

Das Papier kann beispielsweise sowohl in der Masse als auch im Strich (beispielsweise in der Leimpresse) gefärbt werden. Dabei können die Farbstoffe der Mischung auch einzeln dem Papierrohstoff zugegeben werden. Bevorzugt ist aber eine vorgefertigte Mischung.

Bei der Massefärbung kann die Farbstoffmischung dem aufgeschlagenen Zellstoff im Pulper, dem Dickstoff oder dem Dünnstoff zugesetzt werden.

### Farbstoffe

Erfindungsgemäß verwendete Farbstoffe mit einem Absorptionsmaximum im Bereich von von 390 und 470 nm - diese werden im folgenden Farbstoffe der Gruppe 1 genannt - sind beispielsweise C. I. Direct Orange 15, Direct Orange 34, Direct Orange 39, Direct Orange 46; Direct Yellow 4, Direct Yellow 11, Direct Yellow 6, Direct Brown 44; sowie der Farbstoff der Formel (I) 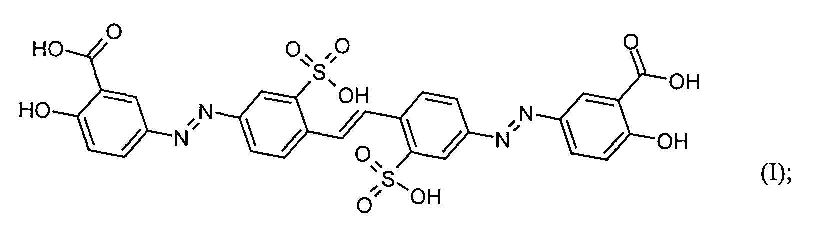 solche mit einem Absorptionsmaximum im Bereich von 560 und 650 nm - diese werden im folgengenden Farbstoffe der Gruppe 2 genannt - sind beispielsweise C. I. Direct Blue 199, Direct Blue 218, Direct Blue 279, Direct Blue 281 sowie die Farbstoffe der Formel (II) - (VI) 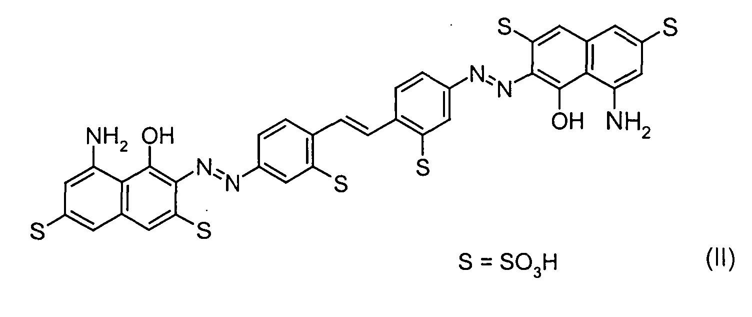 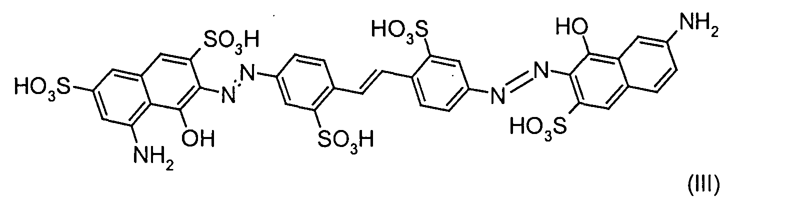 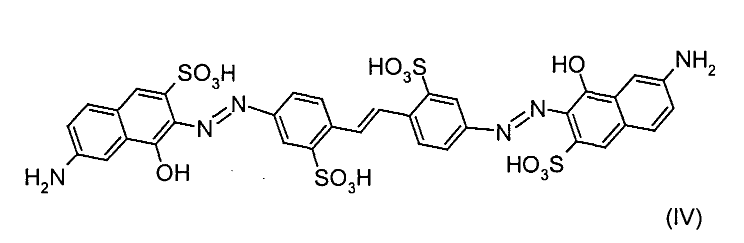 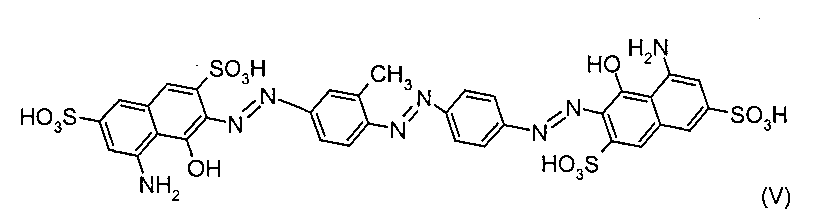 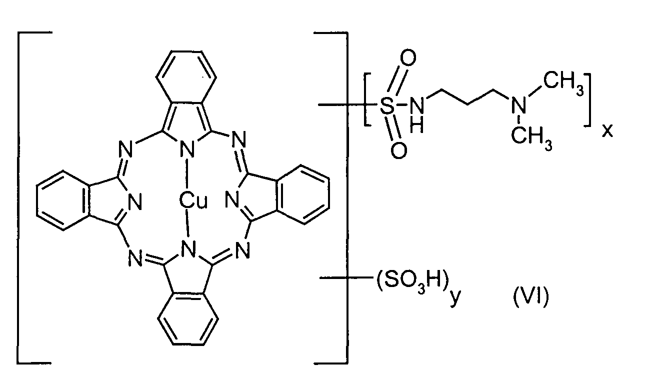 mit
x+y = 3-4

Bevorzugt ist auch die Verwendung einer Mischung von zwei Farbstoffen mit einem Absorptionsmaximum im Bereich von 390 und 470 nm anstelle nur eines.

Bevorzugt werden im erfindungsgemäße Verfahren Mischungen eingesetzt, enthaltend
- 70 - 95 Gew.-%: eines oder mehrerer anionischer Farbstoffe mit jeweils einem Absorptionsmaximum im Bereich von 390 bis 470 nm und vorzugsweise solche, der Gruppe 1 die oben beispielhaft genannt sind und
- 5 - 30 Gew.-%: eines oder mehrerer anionischer Farbsotffe mit jeweils einem Absorptionsmaximum im Bereich von 560 bis 650 nm, vorzugsweise solche der Gruppe 2, die oben beispielhaft genannt sind, insbesondere nur einen Farbstoff dieser Gruppe,
jeweils bezogen auf den Gesamtfarbstoffgehalt der Mischung.

Ebenfalls bevorzugt sind solche Mischungen, die als weiteren Farbstoff einen mit einem Absorptionsmaximum im Bereich von 490 bis 540 nm - diese werden im folgenden Farbstoffe der Gruppe 3 genannt - enthalten. Solche Farbstoffe mit einem Absoprtionsmaximum im Bereich von 490 und 540 nm sind beispielsweise C. I. Direct Red 239, Direct Red 81, Direct Red 253, Direct Red 254, Direct Red 80 sowie die Farbstoffe der Formeln (VII) und (VIII) 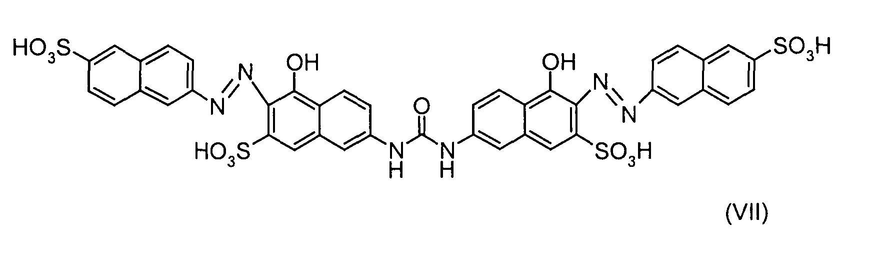 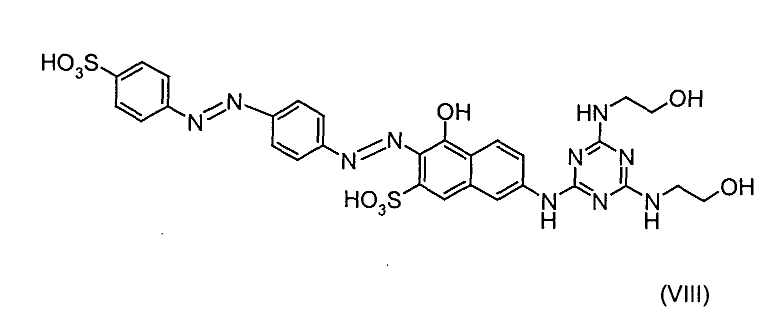 Sofern Farbstoffmischungen eingesetzt werden, die Farbstoffe aus den Gruppen 1, 2 und 3 enthalten, so sind dies vorzugsweise solche enthaltend
- 60 ― 95 Gew.-%: wenigstens eines Farbstoffes aus der Gruppe 1,
- 3 ― 30 Gew.-%: wenigstens eines Farbstoffes aus der Gruppe 2, insbesondere nur ein solcher Farbstoff und
- 2 ― 10 Gew.-%: wenigstens eines Farbstoffes aus der Gruppe 3, insbesondere nur ein solcher Farbstoff,
jeweils bezogen auf den Gesamtfarbstoffgehalt der Mischung.

Folgende Mischungen sind besonders bevorzugt (die Prozentangaben geben die Gew.-Anteile der Mischungskomonenten am Gesamtfarbstoffgehalt in den festen oder flüssigen Formierungen an, berechnet als freie Sulfon- und/oder Carbonsäuren) und ebenfalls Gegenstand der Erfindung:
60-90 % C. I. Direct Brown 44 und 10 - 40 % C. I. Direct Blue 199;
60-90 % I. Direct Brown 44 und 10 - 40 % des Farbstoffes der Formel VI);
70-90 % C. I. Direct Orange 15 und 10 - 30 % C. I. Direct Blue 199;
70-90 % C. I. Direct Orange 15 und 10 - 30 % des Farbstoffes der Formel VI);
70-90 % Farbstoff der Formel I) und 10 - 30 % eines 1:1:1-Gemisches der Farbstoffe der Formeln II), III) und IV);
70-90 % Farbstoff der Formel I) und 10 - 30 % C. I. Direct Blue 279;
40-80 % C. I. Direct Brown 44 und 10 - 30 % C. I. Direct Orange 46 und 10 - 30 % C. I. Direct Blue 199;
40-80 % C. I. Direct Brown 44 und 10 - 30 % C. I. Direct Orange 46 und 10 - 30 % des Farbstoffes der Formel VI);
40-85 % Farbstoff der Formel I) und 5 - 20 % C. I. Direct Red 239 und 10 - 20 % C. I. Direct Blue 279;
40-85 % Farbstoff der Formel I) und 5 - 20 % C. I. Direct Red 239 und 10 - 20 % eines 1:1:1-Gemisches der Farbstoffe der Formeln II), III) und IV);
20-60 % C. I. Direct Brown 44 und 30 - 50 % C. I. Direct Yellow 4 und 10 - 30 % des Farbstoffes der Formel VI);
70-85 % C. I. Direct Yellow 4 und 10 -20 % C. I. Direct Red 239 und 5 - 10 % C. I. Direct Blue 279;
60-85 % C. I. Direct Yellow 4 und 10 -20 % C. I. Direct Red 239 und 5 - 20 % C. I. Direct Blue 199;
70-85 % C. I. Direct Yellow 4 und 10 -20 % C. I. Direct Red 239 und 5 - 10 des 1:1:1-Gemisches der Farbstoffe der Formeln II), III) und IV);
40-70 % C. I. Direct Brown 44, 20 - 40 % C. I. Direct Yellow 4 und 5 - 10 % des Farbstoffes der Formel II.

In einer besonders bevorzugten Ausführungsform werden die Mischungen als stabile konzentrierte wässrige Lösungen, die auch noch übliche Zusätze wie z. B. Harnstoff oder ε-Caprolactam enthalten können, verwendet.

Die erfindungsgemäß verwendeten Mischungen können als feste sowie auch flüssige Präparationen vorliegen.

### Beispiel 1

1000 kg Altpapier werden in einem Pulper mit 20m³ 20 Minuten lang bis zur Stippenfreiheit aufgeschlagen. Der erhaltene Dickstoff wird mit einer Mischung aus 1,2 kg C. I. Direct Brown 44 (Constitution number 35005) und 0,4 kg C. I. Direct Blue 199 (Constitution number 74190), die als konzentriete wässrige Lösung der Natriumsalze hergestellt worden war, versetzt, 10 Minuten lang verrührt und anschließend auf einer Papiermaschine zu einem Papier verarbeitet. Man erhält einen hellbraun gefäbten Testliner mit guter Ausblut- und sehr guter Lichtechtheit.

Verwendet man statt der in Beispiel 1 eingesetzten eine Mischung aus 1,95 kg C. I. Direct Orange 15 (Constitution number 40002/3) und 0,52 kg des Farstoffes der Formel VIII), die als konzentriete wässrige Lösung der Lithium- bzw. Natriumsalze hergestellt worden war, so erhält man ebenfalls einen hellbraun gefärbten Testliner.

### Beispiel 2

Zu einem Dickstoff aus Altpapier mit einem Gehalt von 1 kg pro 20 l Wasser wird im Auslauf der Maschinenbütte mit einer Dosierpumpe kontinuierlich eine Mischung aus 1,6 kg des Farbstoffes der Formel I) und 0,32 kg des Farbstoffes der Formel II), die als konzentrierte wässrige Lösung des Lithiumsalzes bzw. des Triethanolammoniumsalzes hergestellt worden war, in einer Menge entsprechend 0,192 Gewichtsprozent bezogen auf trockenen Stoff zugegeben. Dieser Stoff wird im weiteren Verlauf auf der Papiermaschine zu einem Papier verarbeitet. Man erhält einen hellbraunen Testliner mit guter Ausblut- und Lichtechtheit.

Verwendet man statt der in Beispiel 2 eingesetzten eine Mischung aus 1,1 kg C. I. Direct Brown 44 (Constitution number 35005) und 0,2 kg C. I. Direct Blue 218 (Constitution number 24401), die als konzentrierte wässrige Lösung der Natriumsalze hergestellt worden war, so erhält man ebenfalls einen hellbraun gefärbten Testliner.

### Beispiel 3

Zu einem Dickstoff aus ungebleichtem Kraftzellstoff mit einem Gehalt von 1 kg pro 20 1 Wasser werden im Zulauf der ersten Cleanerstufe mit Dosierpumpen kontinuierlich in einer Gesamtmenge von 0,07 Prozent bezogen auf trockenen Stoff im Verhältnis von 10 : 9 : 1 (bezogen auf den Gehalt an reinen Farbstoffen) konzentrierte wässrige Lösungen von C. I. Direct Orange 46 (Constitution number 40215), C.I. Direct Yellow 4 (Constitution number 24890), jeweils als Natriumsalze, und von dem Farbstoff der Formel II ) als Triethanolammoniumsalz zugesetzt. Dieser Stoff wird im weiteren Verlauf auf der Papiermaschine zu einem Papier verarbeitet. Man erhält einen hellbraunen Liner mit guter Ausblut- und Lichtechtheit.

Verwendet man statt der in Beispiel 3 eingesetzten die konzentrierten wässrigen Lösungen von C. I. Direct Yellow 11 (Constitution number 40000) als Diethanolammoniumsalz, und von den Farbstoffen der Formeln VI) und V) als Natriumsalze im Verhältnis von 10 : 10 : 1 in einer Gesamtmenge von 0,06 Prozent oder von C. I. Direct Brown 44 (Constitution number 35005) als Natriumsalz, C. I. Direct Yellow 4 (Constitution number 24890) als Natrium/Kalium-Mischsalz und dem Farbstoff der Formel II als Triethanolammoniumsalz im Verhältnis 6 : 3 : 1 in einer Gesamtmenge von 0,08 Prozent, so erhält man ebenfalls hellbraune Liner.

### Beispiel 4

Eine Mischung aus 1,8 kg C. I. Direct Yellow 4 (Constitution number 24890), 1,3 kg C. I. Direct Orange 46 (Constitution number 40215) und 0,5 kg C. I. Direct Blue 199 (Constitution number 74190), die als konzentrierte wässrige Lösung der Natriumsalze hergestellt worden war, werden in 1000 L einer 10%igen anionischen Stärkelösung homogen verrührt und mittels einer Leimpresse auf ein aus Kraftzellstoff gefertigtes Papier aufgetragen. Der Auftrag beträgt 2 g/m² absolut trocken pro Seite. Man erhält einen hellbraunen Liner mit guter Ausblut- und Lichtechtheit.

Verwendet man statt der in Beispiel 4 eingesetzten eine Mischung aus 1,0 kg des Farbstoffes der Formel I) als Lithiumsalz und je 0,1 kg von C. I. Direct Red 80 (Constitution number 28160) und einer 1 : 1 : 1 - Mischung der Fabstoffe der Formeln II), III) und IV), jeweils als Triethanolammoniumsalze, und trägt 3 g/m² auf, so erhält man einen hellbraunen Testliner mit guter Ausblut- und Lichtechtheit

### Beispiel 5

Zu einem Dickstoff aus Recycle-Altpapier mit einem Gehalt von 1 kg pro 20 1 Wasser wird im Auslauf der Maschinenbütte mit einer Dosierpumpe kontinuierlich eine Mischung aus

1,2 kg C. I. Direct Yellow 4 (Constitution number 24890), 0,3 kg des Farbstoffes der Formel VII) und 0,2 kg des Farbstoffes der Formel II), die als konzentrierte wässrige Lösung der Natriumsalze bzw. des Triethanolammoniumsalzes hergestellt worden war, in einer Menge entsprechend 0,09 Gewichtsprozent bezogen auf trockenen Stoff zugegeben. Dieser Stoff wird im weiteren Verlauf auf der Papiermaschine zu einem Papier verarbeitet.

Auf dieses Papier wird mittels einer Leimpresse eine in 1000 L einer 10%igen anionischen Stärkelösung homogen verrührten Mischung aus 1,2 kg C. I. Direct Yellow 4 (Constitution number 24890), 0,3 kg des Farbstoffes der Formel VII) und 0,2 kg des Farbstoffes der Formel II), die als konzentrierte wässrige Lösung der Natriumsalze bzw. des Triethanolammoniumsalzes hergestellt worden war, aufgetragen. Der Auftrag beträgt 2 g/m² absolut trocken pro Seite. Man erhält einen hellbraunen Testliner mit guter Ausblut- und Lichtechtheit.

## Patentansprüche

1. Verfahren zur Herstellung von Papier **dadurch gekennzeichnet, dass** man eine Farbstoffmischung verwendet, die wenigstens einen anionischen Farbstoff mit einem Absorptionsmaximum im Bereich von 390 bis 470 nm und wenigstens einen anionischen Farbstoff mit einem Absorptionsmaximum im Bereich von 560 bis 650 nm enthält.

2. Verfahren gemäß Anspruch 1, **dadurch gekennzeichnet, dass** als Farbstoffe mit einem Absorptionsmaximum im Bereich von 390 bis 470 nm C.I.Direct Orange 15, C.I. Direct Orange 34, C.I. Direct Orange 39, C.I. Direct Yellow 4, C.I. Direct Yellow 11, Direct Brown 44 sowie der Farbstoff der Formel I 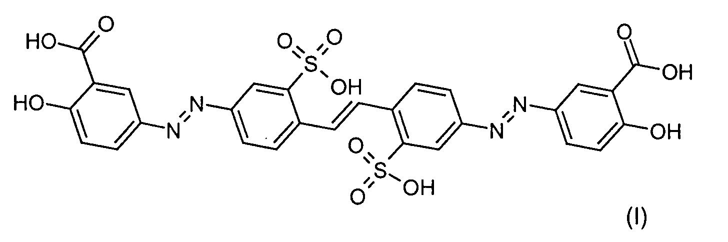 in Frage kommen.

3. Verfahren gemäß Anspruch 1, **dadurch gekennzeichnet, dass** als Farbstoffe mit einem Absorptionsmaximum im Bereich von 560 bis 650 nm C.I. Direct Blue 199, 218, 279, 281 sowie die Farbstoffe der Formeln II-VI 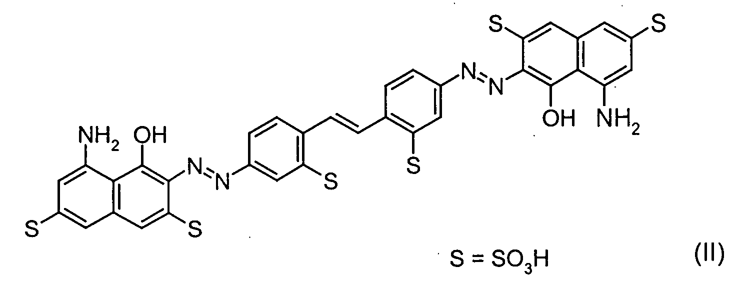 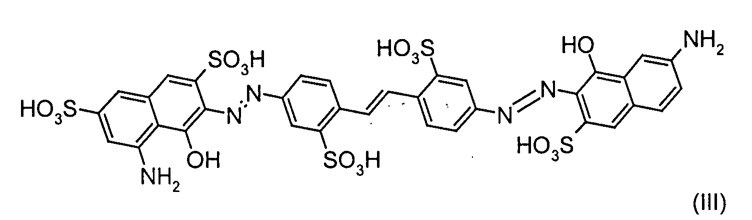 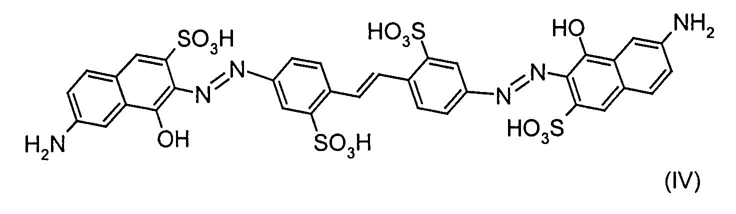 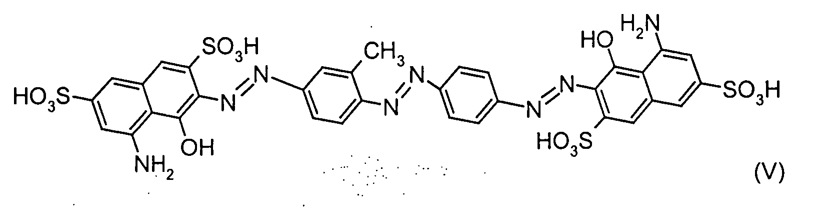 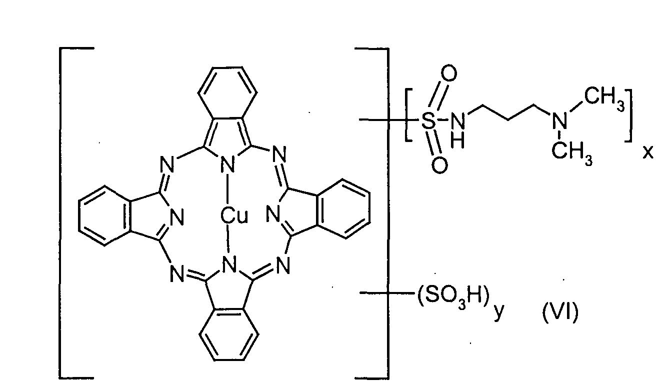 in Frage kommen
mit
x+y = 3-4.

4. Verfahren gemäß Anspruch 1, **dadurch gekennzeichnet, dass** Mischungen eingesetzt werden, enthaltend
70 - 95 Gew.-% eines oder mehrerer anionischer Farbstoffe mit jeweils einem Absorptionsmaximum im Bereich von 390 bis 470 nm und
5 - 40 Gew.-% eines oder mehrerer anionischer Farbstoffe mit jeweils einem Absorptionsmaximum im Bereich von 560 bis 650 nm,
jeweils bezogen auf den Gesamtfarbstoffgehalt der Mischung.

5. Papiere, gefärbt nach wenigstens einem Verfahren der Ansprüche 1-4.

6. Mischungen enthaltend jeweils bezogen auf den Gesamtfarbstoffgehalt (in Gew.-%)
60-90 % C. I. Direct Brown 44 und 10 - 40 % C. I. Direct Blue 199;
60-90 % I. Direct Brown 44 und 10 - 40 % des Farbstoffes der Formel VI);
70-90 % C. I. Direct Orange 15 und 10 - 30 % C. I. Direct Blue 199;
70-90 % C. I. Direct Orange 15 und 10 - 30 % des Farbstoffes der Formel VI);
70-90 % Farbstoff der Formel I) und 10 - 30 % eines 1:1:1-Gemisches der Farbstoffe der Formeln II), III) und IV);
70-90 % Farbstoff der Formel I) und 10 - 30 % C. I. Direct Blue 279;
40-80 % C. I. Direct Brown 44 und 10 - 30 % C. I. Direct Orange 46 und 10 - 30 % C. I. Direct Blue 199;
40-80 % C. I. Direct Brown 44 und 10 - 30 % C. I. Direct Orange 46 und 10 - 30 % des Farbstoffes der Formel VI);
40-85 % Farbstoff der Formel I) und 5 - 20 % C. I. Direct Red 239 und 10 - 20 % C. I. Direct Blue 279;
40-85 % Farbstoff der Formel I) und 5 - 20 % C. I. Direct Red 239 und 10 - 20 % eines 1:1:1-Gemisches der Farbstoffe der Formeln II), III) und IV);
20-60 % C. I. Direct Brown 44 und 30 - 50 % C. I. Direct Yellow 4 und 10 - 30 % des Farbstoffes der Formel VI);
70-85 % C. I. Direct Yellow 4 und 10 -20 % C. I. Direct Red 239 und 5 - 10 % C. I. Direct Blue 279;
60-85 % C. I. Direct Yellow 4 und 10 -20 % C. I. Direct Red 239 und 5 - 20 % C. I. Direct Blue 199;
70-85 % C. I. Direct Yellow 4 und 10 -20 % C. I. Direct Red 239 und 5 - 10 % des 1:1:1-Gemisches der Farbstoffe der Formeln II), III) und IV);
40-70 % C. I. Direct Brown 44, 20 - 40 % C. I. Direct Yellow 4 und 5 - 10 % des Farbstoffes der Formel II.
